# EUROPEAN PATENT SPECIFICATION

(11) **EP 3 936 703 B1**
(45) Date of publication and mention of the grant of the patent: **22.02.2023**
(21) Application number: 20425022.9
(22) Date of filing: 06.07.2020
(51) Int. Cl.: F01K 13/02

(54) **POWER PLANT AND METHOD FOR OPERATING SAID POWER PLANT**
KRAFTWERK UND VERFAHREN ZUM BETRIEB DES BESAGTEN KRAFTWERKS
CENTRALE ÉLECTRIQUE ET PROCÉDÉ DE FONCTIONNEMENT DE LADITE CENTRALE

(43) Date of publication of application: 12.01.2022
(73) Proprietor: ANSALDO ENERGIA S.p.A., 16152 Genova (IT); Ansaldo Energia Switzerland AG, 5400 Baden (CH)
(72) Inventor: Zanier, Sandro, 16152 Genova (IT); Ottonello, Alberto, 16152 Genova (IT); Pirri, Francesco, 16152 Genova (IT); Simon-Delgado, Carlos, 5400 Baden (CH)
(74) Representative: Andreotti, Erika

(56) References cited:
- US-A- 5 172 553
- US-A- 5 473 898
- US-B2- 9 422 826

## Description

### TECHNICAL FIELD

The invention relates to a power plant and to a method for operating said power plant. Preferably, the invention relates to a combined cycle power plant comprising a steam unit.

### BACKGROUND

Combined cycle power plants normally comprise a gas turbine unit, a steam unit and a steam generator supplied with exhaust gases coming from the gas turbine unit and configured to generate steam to be supplied to the steam. unit.

The steam generator comprises an exhaust fumes flow chamber, through which the exhaust fumes of the gas turbine unit flow, and a steam circuit supplied with demineralised water.

The steam circuit extends inside the exhaust fumes flow chamber, in such a way as to use the heat of the hot fumes coming from the gas turbine unit to generate steam in the steam circuit.

The steam is supplied to the steam unit to create further work.

Normally, the steam unit comprises more than one steam turbine. The most common arrangement comprises a high-pressure steam turbine, a medium-pressure steam turbine and a low-pressure steam turbine.

In combined cycle power plants, it is important to shorten the run up and loading rate during the start-up times. It is in fact essential achieving a high level of reliability end efficiency of the power plant during the start-up.

The run up and loading rate for the steam unit start-up is determined by the initial temperature of internal parts of the steam unit. Therefore, the fastest run-up rate and the consequent shortest turbine start-up time is achievable at hottest starting conditions of the steam unit.

However, the natural cooling down decreases the steam unit temperature and, consequently, a faster start-up cannot be obtained if the plant has been shutdown just for few hours. A known solution is disclosed in document US 5172553. However, such a solution is not sufficiently effective in keeping high temperature of the internal parts of the steam unit.

### SUMMARY

Hence, it is an object of the present invention to provide a power plant, which is able to counter, as far as possible, the natural cooldown of the steam unit to reduce the start-up times after shutdown.

In accordance with these objects, the invention relates to a power plant as claimed in claim 1.

It is also another scope of the present invention to provide a method for operating a power plant according to claim 15.

### BRIEF DESCRIPTION OF THE DRAWINGS

The invention will now be described with reference to the accompanying drawings, which show a non-limiting embodiment thereof, wherein:
- Figure 1 is a schematic representation, with parts removed for clarity, of a power plant according to the present invention;
- Figure 2 is a schematic representation of a first detail of the power plant of figure 1;
- Figure 3 is block representation of a second detail of the power plant of figure 1;
- Figure 4 is a schematic representation of the first detail of the power plant of figure 1 according to a first variant of the present invention;
- Figure 5 is a schematic representation of the first detail of the power plant of figure 1 according to a second variant of the present invention.

### DETAILED DESCRIPTION OF EXEMPLARY EMBODIMENTS

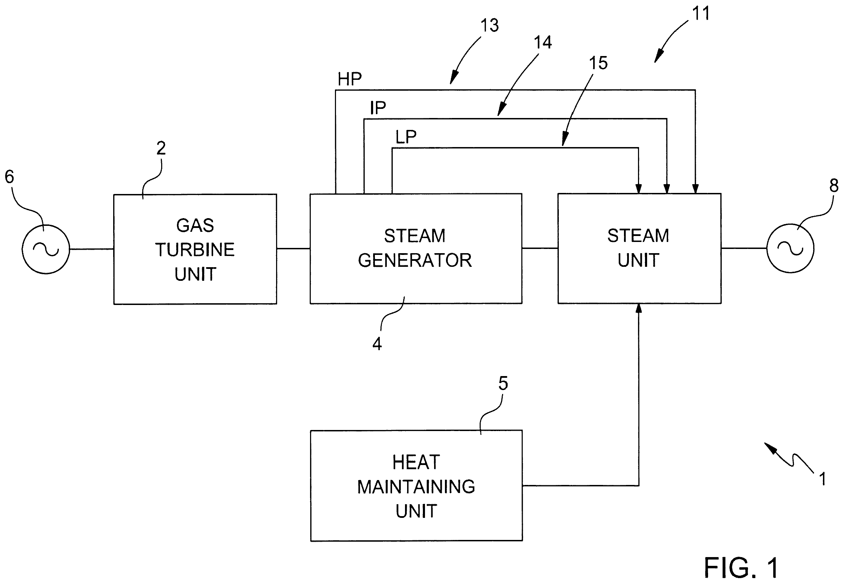

In figure 1 reference numeral 1 indicates a power plant according to the present invention.

The plant 1 illustrated in figure 1 is preferably a combined cycle power plant configured to produce only electrical energy.

A variant not illustrated envisages that the plant 1 is configured for the production of electric energy and/or thermal energy, useful for cogeneration processes such as district heating systems for civil use (homes and offices) and industrial use (heating greenhouses for plant growing), and transmission of thermal energy for heating distillation towers for the refining of petroleum products in refineries.

The plant 1 comprises a gas turbine unit 2, a steam unit 3 and a steam generator 4 supplied with exhaust gases coming from the gas turbine unit 2 and configured to generate steam to be supplied to the steam unit 3. The plant 1 comprises also a heat maintaining assembly 5 configured to control the temperature in the steam unit 3 during the shut-off of the plant 1.

The gas turbine unit 2 is the prime mover of the combined cycle plant 1 and can be fed with any fuel.

The gas turbine unit 2 is connected to a generator 6 and comprises a compressor, a combustion chamber and a gas turbine (not shown in the attached figures). The gas turbine drives the generator 6 to generate available electric energy.

According to a variant not shown, the plant can comprise a source of hot gases different from the gas turbine unit 2. For example, the plant can comprises a fossil fuel boiler as a steam generator.

The steam unit 3 is configured to exploit the steam generated by the steam generator 4.

In the non-limiting example described and illustrated herein, the steam unit 3 is a steam turbine unit.

According to a variant not shown, the plant can comprise a different steam unit. For example, the steam unit may be a chemical plant or any plant capable of using the steam produced by the steam generator 4.

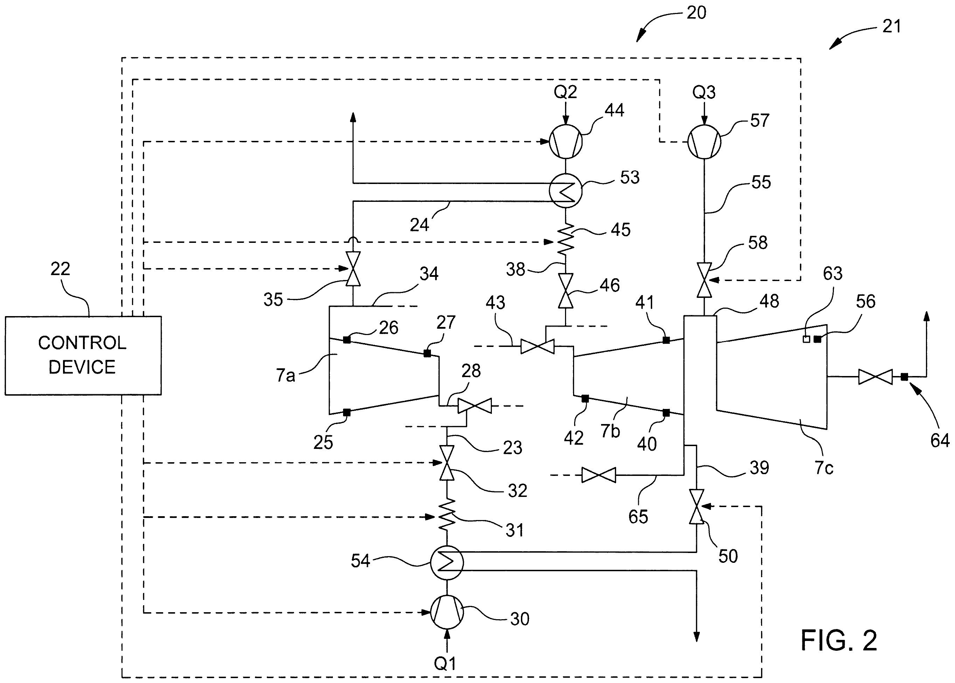

The steam unit 3 is coupled to a respective generator 8 and comprises a high-pressure steam turbine 7a, an intermediate pressure steam turbine 7b, and a low-pressure steam turbine 7c (shown schematically in figure 2).

As better disclosed later, each turbine 7a, 7b, 7c is provided with a casing 9a, 9b, 9c defined by a lower casing portion (resting on the floor) and an upper casing portion coupled together.

The steam generator 4 recovers the residual heat from the combustion fumes generated by the gas turbine unit 2 and produces steam to be supplied to the steam unit 3.

The steam generator 4 comprises an exhaust fumes flow chamber (not illustrated), through which the exhaust fumes of the gas turbine unit 2 flow, and a steam circuit 11 (partially visible in figure 1) supplied with demineralised water.

The steam circuit 11 extends inside the exhaust fumes flow chamber, in such a way as to use the heat from the hot fumes coming from the gas turbine unit 2 to generate steam to be supplied to the steam turbine unit 3.

In particular, in the example illustrated, the steam circuit 11 comprises a high pressure section 13 (only partially visible) for supplying steam to the high-pressure steam turbine 7a, an intermediate pressure section 14 (only partially visible) for supplying steam to the intermediate pressure steam turbine 7b, and a low-pressure section 15 (only partially visible) for supplying steam to the low-pressure steam turbine 7c.

As already stated, the heat maintaining assembly 5 is configured to control the temperature in the steam unit 3 during the shut-off of the plant 1.

In particular, the heat maintaining assembly 5 is configured to be active when the steam turbines 7a, 7b and 7c are rotating at a predefined speed, sufficient to obtain a distribution of the fluids in the turbine expansion channels. Said predefined speed is greatly lower than the speed at which the turbines rotate when the plant is operating at the nominal power.

For example, said predefined speed can be substantially lower than 60 rpm.

Therefore, after the shutdown of the plant 1, the steam turbines 7a, 7b and 7c of the turbine unit 3 are moved at a predefined speed and then the heat maintaining assembly '5 is activated in order to control the temperature in the steam turbine unit 3. In other words, the heat maintaining assembly 5 can operate on turbines moving at a predefined speed.

In the non-limiting example here disclosed and illustrated, the heat maintaining assembly 5 is configured to maintain heated the high pressure steam turbine 7a and the intermediate pressure steam turbine 7b and, preferably, to cool the air entering in the low pressure steam turbine 7c.

According to variant not shown, the heat maintaining assembly 5 can be configured to maintain heated the high pressure steam turbine 7a or the intermediate pressure steam turbine 7b.

Referring to the non-limiting example here disclosed and illustrated, the heat maintaining assembly 5 comprises a first heating arrangement 19 configured to maintain heated the high pressure steam turbine 7a, a second heating arrangement 20 configured to maintain heated the intermediate pressure steam turbine 7b, a cooling arrangement 21 configured to cool the air entering in the low pressure steam turbine 7c and a control device 22 configured to regulate the first heating arrangement 19, the second heating arrangement 20 and the cooling arrangement 21.

The first heating arrangement 19 comprises a supply line 23, a return line 24, a lower casing temperature sensor 25, an upper casing temperature sensor 26 and a rotor temperature sensor 27.

The supply line 23 is configured to supply a flow rate Q1 of heated air into a high pressure steam feeding conduit 28 of the steam circuit 11.

In particular, the air supply line 23 comprises at least one blower 30, at least one heater 31 and at least one shut-off valve 32.

The blower 30 is configured to draw the flow rate Q1 of air from an air source line (not illustrated). In the non-limitative example here disclosed and illustrated, the air supplied to the blower 30 is ambient air.

The heater 31 is an electric heater configured to heat the flow air passing through it.

The shut-off valve 32 is configured to isolate the supply line 23 when the plant 1 is normally operating. In other words, shut-off valve 32 is open when the plant 1 is shut-off and closed when the plant 1 is on.

The return line 24 is configured to draw a return air flow rate from a high pressure exhaust conduit 34 of the steam circuit 11. In the embodiment illustrated here in figure 2, the return line 24 discharges the return air flow rate in the ambient.

The return line 24 comprises a return shut off valve 35 configured to isolate the return line 24 when the plant 1 is normally operating.

The lower casing temperature sensor 25 is arranged outside the lower casing portion of the casing 9a and is configured to detect a lower casing temperature TL1.

The upper casing temperature sensor 26 is arranged outside the upper casing portion of the casing 9a and is configured to detect an upper casing temperature TU1.

The rotor temperature sensor 27 is configured to detect a temperature indicative of the temperature of the rotor TR1 of the high-pressure steam turbine 7a. In particular, the rotor temperature sensor 27 is arranged in the casing 9a near the inner surface of the expansion channel of the high-pressure steam turbine 7a. In this way, the rotor temperature sensor 27 is not in contact with the fluid flowing in the expansion channel.

The blower 30, the heater 31, the supply valve 32 and the return valve 35 are controlled by the control device 22 as will be detailed later.

The second heating arrangement 20 of the embodiment disclosed in figure 2 is substantially identical to the first heating arrangement and comprises a supply line 38, a return line 39, a lower casing temperature sensor 40, a upper casing temperature sensor 41 and a rotor temperature sensor 42.

The supply line 38 is configured to supply a flow rate Q2 of heated air into an intermediate pressure steam feeding conduit 43 of the steam circuit 11.

In particular, the air supply line 38 comprises at least one blower 44, at least one heater 45 and at least one shut-off valve 46.

The blower 44 is configured to draw the flow rate Q2 of air from an air source line (not illustrated). In the non-limitative example here disclosed and illustrated, the air supplied to the blower 44 is ambient air.

The heater 45 is an electric heater configured to heat the flow air passing through it.

The shut-off valve 46 is configured to isolate the supply line 38 when the plant 1 is normally operating. In other words, shut-off valve 46 is open when the plant 1 is shut off and closed when the plant 1 is on.

The return line 39 is configured to draw a return air flow rate from an intermediate pressure exhaust conduit 48. In the embodiment illustrated here in figure 2, the return line 39 discharges the return air flow rate in the ambient.

The return line 39 comprises a return shut off valve 50 configured to isolate the return line 39 when the plant 1 is normally operating.

The lower casing temperature sensor 40 is arranged outside the lower casing portion of the casing 9b and is configured to detect a lower casing temperature TL2.

The upper casing temperature sensor 41 is arranged outside the upper casing portion of the casing 9b and is configured to detect an upper casing temperature TU2.

The rotor temperature sensor 42 is configured to detect a temperature indicative of the temperature of the rotor TR2 of the intermediate pressure steam turbine 7b. In particular, the rotor temperature sensor 42 is arranged in the casing 9b near the inner surface of the expansion channel of the high-pressure steam turbine 7a. In this way, the rotor temperature sensor 42 is not in contact with the fluid flowing in the expansion channel.

The blower 44, the heater 45, the supply valve 46 and the return valve 50 are controlled by the control device 22 as will be detailed later.

The heat maintaining assembly 5 is also provided with a first heat exchanger 53 configured to transfer heat from the return line 24 of the first heating arrangement 19 to the supply line 38 of the second heating arrangement 20, and a second heat exchanger 54 configured to transfer heat from the return line 39 of the second heating arrangement 20 to the supply line 23 of the first heating arrangement 19.

The cooling arrangement 21 comprises a supply line 55 and exhaust temperature sensor 56.

The supply line is configured to supply a flow rate Q3 of air into the intermediate pressure exhaust conduit 48 coming from the intermediate pressure steam turbine 7b.

In particular, the supply line 55 comprises a blower 57 and a shut off valve 58. The blower 57 is configured to draw the flow rate Q3 of air from an air source line (not illustrated). In the non-limitative example here disclosed and illustrated, the air supplied to the blower 57 is ambient air. According to a variant air supplied to blower 57 can be air cooled preferably in a controlled way.

In this way the air entering the low pressure steam turbine 7c is cooled by air flow rate Q3.

The shut-off valve 58 is configured to isolate the supply line 55 when the plant 1 is normally operating. In other words, shut-off valve 58 is open when the plant 1 is shut off and closed when the plant 1 is on.

The exhaust temperature sensor 56 detects the temperature TEX3 of the fluid at the outlet of the low pressure steam turbine 7c.

Preferably, the plant 1 is also provided with an exhaust pressure sensor 63 arranged at the outlet of the low pressure steam turbine 7c and configured to detect the relative pressure of the fluid.

Preferably, the control device 22 is configured to monitor the pressure measured by the exhaust pressure sensor 63 and to decrease all the flow rates Q1, Q2, Q3 by regulating respective blowers 30, 44 and 57 if the pressure measured by the exhaust pressure sensor 63 is greater than a threshold value.

Preferably, the plant 1 is also provided with a humidity sensor 64 at outlet to avoid oxidation into low pressure steam turbine 7c.

The blower 57 and the shut off valve 58 are controlled by the control device 22 as detailed here below.

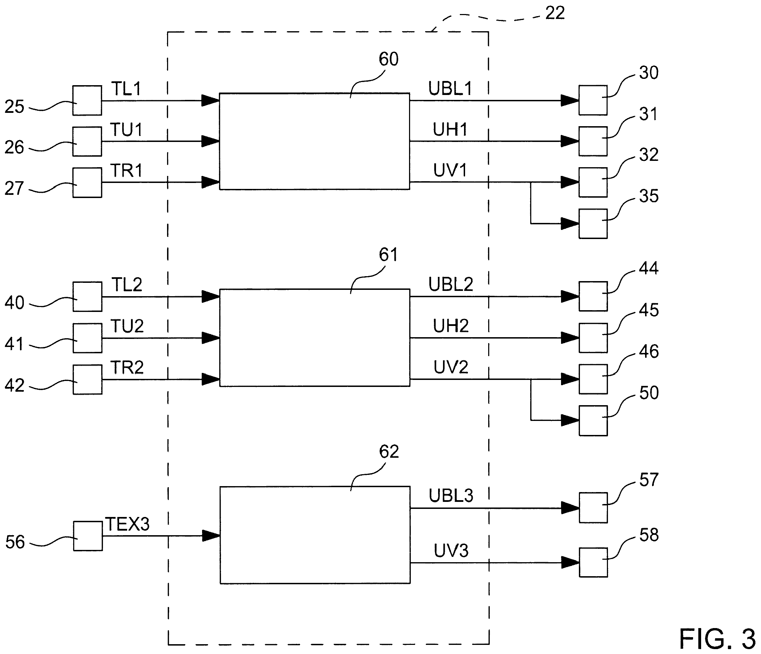

With reference to figure 3, the control device 22 comprises a first module 60 configured to regulate the first heating arrangement 19, a second module 61 configured to regulate the second heating arrangement 20 and a third module 62 configured to regulate the cooling arrangement 21.

The first module 60 is configured to calculate:
- a control signal UBL1 for regulating the blower 30 on the basis of the difference between the upper casing temperature TU1 detected by upper casing temperature sensor 26 and the lower casing temperature TL2 detected by lower casing temperature sensor 25 and, preferably, also on the basis of the gradient of the temperature indicative of the temperature of the rotor TR1 detected by rotor temperature sensor 27; in particular, the first module 60 is configured to calculate a control signal UBL1 able to regulate the blower 30 so as to increase the flow rate Q1 when the difference between the upper casing temperature TU1 and the lower casing temperature TL1 is greater than a threshold value and, preferably, able to regulate the blower 30 so as the gradient of the temperature indicative of the temperature of the rotor TR1 is comprised in a safety range;
- a control signal UH1 for regulating the heater 31 on the basis of the temperature of the rotor TR1 detected by rotor temperature sensor 27; in particular, the control signal UH1 regulates the heater 31 so as to maintain the temperature of the rotor TR1 in a desired range;
- a control signal UV1 for regulating the shutoff valves 32 and 35 on the basis of a signal indicative of the operating conditions of the plant 1; in particular, control signal UV1 closes valves 32 and 35 when the plant is on and opens valves 32 and 35 when the plant is shut down.

Analogously, the second module 61 is configured to calculate:
- a control signal UBL2 for regulating the blower 44 on the basis of the difference between the upper casing temperature TU2 detected by upper casing temperature sensor 41 and the lower casing temperature TL2 detected by lower casing temperature sensor 40 and, preferably, also on the basis of the gradient of the temperature indicative of the temperature of the rotor TR2 detected by rotor temperature sensor 42; in particular, the first module 60 is configured to calculate a control signal UBL2 able to regulate the blower 44 so as to increase the flow rate Q2 when the difference between the upper casing temperature TU2 and the lower casing temperature TL2 is greater than a threshold value and, preferably, able to regulate the blower 44 so as the gradient of the temperature indicative of the temperature of the rotor TR2 is comprised in a safety range;
- a control signal UH2 for regulating the heater 45 on the basis of the temperature indicative of the temperature of the rotor TR2 detected by rotor temperature sensor 42; in particular, the control signal UH2 regulates the heater 45 so as to maintain the temperature of the rotor TR2 in a desired range;
- a control signal UV2 for regulating the shutoff valves 46 and 50 on the basis of a signal indicative of the operating conditions of the plant 1; in particular, control signal UV2 closes valves 46 and 50 when the plant is on and opens valves 46 and 50 when the plant is shut down.
The third module 62 is configured to calculate:
- a control signal UBL3 for regulating the blower 57 on the basis of the temperature TEX3 of the fluid at the outlet of the low pressure steam turbine 7c detected by the exhaust temperature sensor 56; in particular, control signal UBL3 regulates the blower 57 so as to maintain the temperature TEX3 of the fluid at the outlet of the low pressure steam turbine 7c in a desired range;
- a control signal UV3 for regulating the shutoff valve 58 on the basis of a signal indicative of the operating conditions of the plant 1; in particular, control signal UV3 closes valve 58 when the plant is on and opens valve 58 when the plant is shut down.

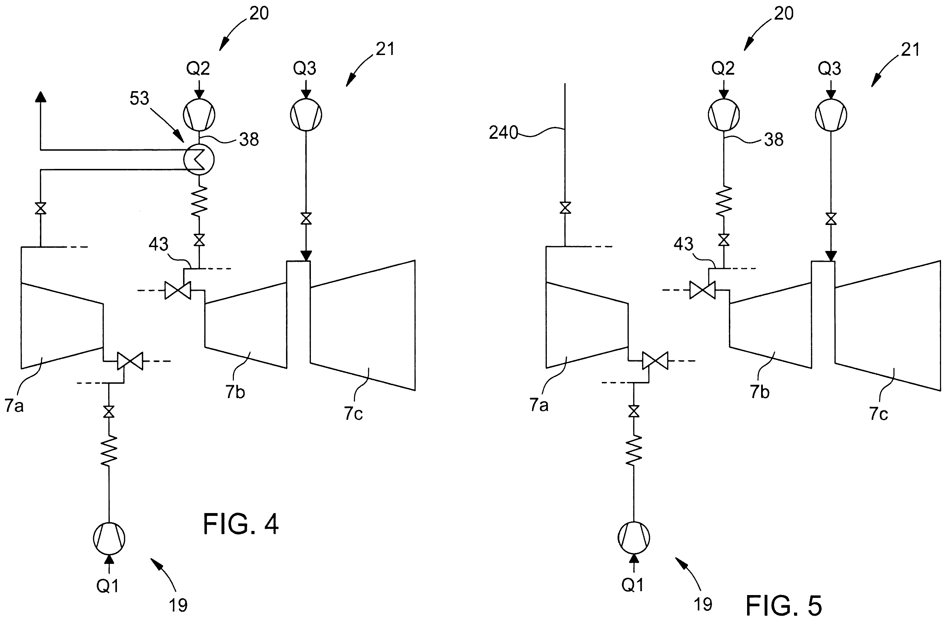

In figures 4-7 different embodiments of the plant 1 according to the present invention are represented.

In figures 4-7 the same reference numeral used in figures 1-3 are used for indicating identical or similar parts.

In figure 4 it is represented a second embodiment of the plant according to the present invention, which differs from the embodiment of figure 2 for the fact that the second heating arrangement 20 is not provided with a return line. Therefore, the second heating arrangement 20 comprises only a supply line 38 configured to supply a flow rate Q2 of heated air into an intermediate pressure steam feeding conduit 43.

In figure 5 it is represented a third embodiment of the plant according to the present invention, which differs from the embodiment of figure 2 for the fact that the second heating arrangement 20 is not provided with a return line and the first heating arrangement is provided with a return line 240 which does not supply any heat exchanger for recovering heat in favour of the supply line 38 of the second heating arrangement 20.

Advantageously, in the plant according to the present invention the temperature of the steam unit 3 is controlled during the shut-down period. This leads to fastest run-up rates and the consequently shortest turbine start-up times.

## Claims

1. Power plant comprising:
- at least one gas turbine unit (2);
- at least one steam unit (3) provided with at least one first steam turbine (7a; 7b) rotating about a shaft and provided with a casing (9a; 9b) comprising a first lower casing and a first upper casing coupled together;
- a steam generator (4) supplied with exhaust gases coming from the gas turbine unit (2) and configured to generate steam to be supplied to the steam unit (3); the steam generator (4) comprising an exhaust fumes flow chamber in which the exhaust fumes of the gas turbine unit (2) flow, and a steam circuit (11) supplied with demineralised water and extending inside the exhaust fumes flow chamber, in such a way as to use the heat from the hot fumes coming from the gas turbine unit (2) to generate steam to be supplied to the steam turbine unit (3);
- a heat maintaining assembly (5) for controlling the temperature in the steam unit (3) during the shut-off of the plant (1); the heat maintaining assembly (5) comprising:
▪ a first supply line (23; 38) configured to supply a first flow rate (Q1; Q2) of heated air into at least one first steam feeding conduit (28; 43) of the steam circuit (11) supplying the at least one first steam turbine (7a; 7b); the first air supply line (23; 38) comprising a first blower (30; 44) and at least one first heater (31; 45);
▪ a first upper casing temperature sensor (26; 41) arranged outside the first upper casing and configured to detect a first upper casing temperature (TU1; TU2);
▪ a first lower casing temperature sensor (25; 40) arranged outside the first lower casing and configured to detect a first lower casing temperature (TL1; TL2);
▪ a control device (22) configured to regulate at least the first blower (30; 44) on the basis of the difference between the first upper casing temperature (TU1; TU2) and the first lower casing temperature (TL1; TL2).

2. Power plant according to claim 1, wherein the control device (22) is configured to regulate the first blower (30; 44) so as to increase the first flow rate (Q1; Q2) of heated air when the difference between the first upper casing temperature (TU1; TU2) and the first lower casing temperature (TL1; TL2) is greater than a threshold value.

3. Power plant according to claim 1 or 2, comprising a first rotor temperature sensor (27; 42) configured to detect a temperature indicative of the temperature of the first rotor (TR1; TR2) of the first steam turbine (7a; 7b); the control device (22) being configured to regulate at least the first blower (30; 44) on the basis of the gradient of the temperature indicative of the temperature of the first rotor (TR1; TR2).

4. Power plant according to claim 3, wherein the control device (22) is configured to regulate the blower (30; 44) so as the gradient of the temperature indicative of the temperature of the first rotor (TR1; TR2) is comprised in a safety range.

5. Power plant according to claim 3 or 4, wherein the control device (22) is configured to regulate the first heater (31; 45) so as the temperature indicative of the temperature of the first rotor (TR1; TR2) is greater than a threshold value.

6. Power plant according to anyone of the foregoing claims, comprising a first return line (24; 39) configured to draw a first return air flow rate from a first exhaust conduit (34; 48) of the first steam turbine (7a; 7b).

7. Power plant according to claim 6, wherein the steam unit (3) comprises at least one second steam turbine (7b; 7a) rotating about the same shaft of the first steam turbine (7a; 7b); the heat maintaining assembly (5) comprising a second supply line (38; 23) configured to supply a second flow rate (Q2; Q1) of heated air into at least one second steam feeding conduit (43; 28) of the steam circuit (11) supplying the at least one second steam turbine (7b; 7a); the second supply line (38; 23) comprising a second blower (44; 30) and at least one second heater (45; 31).

8. Power plant according to claim 7, wherein the first steam turbine (7a) is a high pressure steam turbine and the second steam turbine (7b) is an intermediate pressure steam turbine.

9. Power plant according to claim 7 or 8, wherein the heat maintaining system (5) comprises a first heat exchanger (53) configured to transfer heat from the first return line (24; 39) to the second supply line (38; 23).

10. Power plant according to claim 8 or 9, wherein the heat maintaining assembly (5) comprises a second return line (39; 24) configured to draw a second return air flow rate from a second exhaust conduit (48; 34) of the second steam turbine (7b; 7a)

11. Power plant according to claim 10, wherein the heat maintaining system (5) comprises a second heat exchanger (54) configured to transfer heat from the second return line (39; 24) to the first supply line (23; 38).

12. Power plant according to anyone of claims from 7 to 11, wherein the second steam turbine (7b; 7a) is provided with a second casing (9b; 9a) defined by a second lower casing and a second upper casing coupled together; the heat maintaining assembly (5) comprising:
a second upper casing temperature sensor (41; 26) arranged outside the second upper casing and configured to detect a second upper casing temperature (TU2; TU1);
a second lower casing temperature sensor (40; 25) arranged outside the second lower casing and configured to detect a second lower casing temperature (TL2; TL1);
the control device (22) being configured to regulate at least the second blower (44; 30) on the basis of the difference between the second upper casing temperature (TU2; TU1) and second lower casing temperature (TL2; TL1).

13. Power plant according to anyone of the claims from 7 to 12, comprising a third steam turbine (7c) rotating about the same shaft of the first steam turbine (7a); the heat maintaining assembly (5) comprising a cooling arrangement (21) configured to supply cooling air to the third steam turbine (7c).

14. Power plant according to claim 13, wherein the third steam turbine (7c) is a low pressure steam turbine.

15. Method for operating a power plant as claimed in any of the forgoing claims; the method comprising:
- shutting down the plant (1);
- rotating the at least one first steam turbine (7a; 7b) at a predefined speed lower than 60 rpm;
- activating the heat maintaining assembly (5);
- deactivating the heat maintaining assembly (5) when the plant (1) starts up again.

## Patentansprüche

1. Kraftwerksanlage, umfassend:
- wenigstens eine Gasturbineneinheit (2);
- wenigstens eine Dampfeinheit (3), die mit wenigstens einer ersten Dampfturbine (7a; 7b) versehen ist, die um eine Welle rotiert und ein Gehäuse (9a; 9b) aufweist, das ein erstes unteres Gehäuse und ein erstes oberes Gehäuse umfasst, die miteinander verbunden sind;
- einen Dampferzeuger (4), dem Abgase aus der Gasturbineneinheit (2) zugeführt werden und der dazu konfiguriert ist, Dampf zu erzeugen, der der Dampfeinheit (3) zugeführt wird; wobei der Dampferzeuger (4) eine Abgasströmungskammer, in der die Abgase der Gasturbineneinheit (2) strömen, und einen Dampfkreislauf (11) umfasst, dem entmineralisiertes Wasser zugeführt wird und der sich innerhalb der Abgasströmungskammer erstreckt, derart, dass die Wärme der heißen Abgase aus der Gasturbineneinheit (2) genutzt wird, um Dampf zu erzeugen, der der Dampfturbineneinheit (3) zugeführt wird;
- eine Wärmehalteanordnung (5) zum Kontrollieren der Temperatur in der Dampfeinheit (3) während der Abschaltung der Anlage (1); wobei die Wärmehalteanordnung (5) umfasst:
• eine erste Zuführungsleitung (23; 38), die dazu konfiguriert ist, einen ersten Durchsatz (Q1; 02) von erwärmter Luft in wenigstens einen ersten Dampfspeisungskanal (28; 43) des Dampfkreislaufs (11) zuzuführen, der die wenigstens eine erste Dampfturbine (7a; 7b) versorgt; wobei die erste Luftzuführungsleitung (23; 38) ein erstes Gebläse (30; 44) und wenigstens eine erste Heizeinrichtung (31; 45) umfasst;
• einen ersten oberen Gehäusetemperatursensor (26; 41), der außen an dem ersten oberen Gehäuse angeordnet ist und dazu konfiguriert ist, eine Temperatur des ersten oberen Gehäuses (TU1; TU2) zu erfassen;
• einen ersten unteren Gehäusetemperatursensor (25; 40), der außen an dem ersten unteren Gehäuse angeordnet ist und dazu konfiguriert ist, eine Temperatur des ersten unteren Gehäuses (TL1; TL2) zu erfassen;
• eine Steuervorrichtung (22), die dazu konfiguriert ist, wenigstens das erste Gebläse (30; 44) auf der Grundlage der Differenz zwischen der Temperatur des ersten oberen Gehäuses (TU1; TU2) und der Temperatur des ersten unteren Gehäuses (TL1; TL2) zu regeln.

2. Kraftwerksanlage nach Anspruch 1, wobei die Steuervorrichtung (22) dazu konfiguriert ist, das erste Gebläse (30; 44) so zu regeln, dass der erste Durchsatz (Q1; Q2) der erwärmten Luft erhöht wird, wenn die Differenz zwischen der Temperatur des ersten oberen Gehäuses (TU1; TU2) und der Temperatur des ersten unteren Gehäuses (TL1; TL2) größer als ein Schwellenwert ist.

3. Kraftwerksanlage nach Anspruch 1 oder 2, die einen ersten Rotortemperatursensor (27; 42) umfasst, der dazu konfiguriert ist, eine Temperatur zu erfassen, die die Temperatur des ersten Rotors (TR1; TR2) der ersten Dampfturbine (7a; 7b) anzeigt; wobei die Steuervorrichtung (22) dazu konfiguriert ist, wenigstens das erste Gebläse (30; 44) auf der Grundlage des Gradienten der Temperatur, die die Temperatur des ersten Rotors (TR1; TR2) anzeigt, zu regeln.

4. Kraftwerksanlage nach Anspruch 3, wobei die Steuervorrichtung (22) dazu konfiguriert ist, das Gebläse (30; 44) so zu regeln, dass der Gradient der Temperatur, die die Temperatur des ersten Rotors (TR1; TR2) anzeigt, in einem Sicherheitsbereich liegt.

5. Kraftwerksanlage nach Anspruch 3 oder 4, wobei die Steuervorrichtung (22) dazu konfiguriert ist, die erste Heizeinrichtung (31; 45) so zu regeln, dass die Temperatur, die die Temperatur des ersten Rotors (TR1; TR2) anzeigt, größer als ein Schwellenwert ist.

6. Kraftwerksanlage nach einem der vorangehenden Ansprüche, die eine erste Rücklaufleitung (24; 39) umfasst, die dazu konfiguriert ist, einen ersten Rückluftdurchsatz aus einem ersten Abgaskanal (34; 48) der ersten Dampfturbine (7a; 7b) zu entnehmen.

7. Kraftwerksanlage nach Anspruch 6, wobei die Dampfeinheit (3) wenigstens eine zweite Dampfturbine (7b; 7a) umfasst, die um dieselbe Welle rotiert wie die erste Dampfturbine (7a; 7b); wobei die Wärmehalteanordnung (5) eine zweite Zuführungsleitung (38; 23) umfasst, die dazu konfiguriert ist, einen zweiten Durchsatz (Q2; Q1) von erwärmter Luft in wenigstens einen zweiten Dampfspeisungskanal (43; 28) des Dampfkreislaufs (11) zuzuführen, der die wenigstens eine zweite Dampfturbine (7b; 7a) versorgt; wobei die zweite Zuführungsleitung (38; 23) ein zweites Gebläse (44; 30) und wenigstens eine zweite Heizeinrichtung (45; 31) umfasst.

8. Kraftwerksanlage nach Anspruch 7, wobei die erste Dampfturbine (7a) eine Hochdruckdampfturbine ist und die zweite Dampfturbine (7b) eine Mitteldruckdampfturbine ist.

9. Kraftwerksanlage nach Anspruch 7 oder 8, wobei die Wärmehalteanordnung (5) einen ersten Wärmetauscher (53) umfasst, der dazu konfiguriert ist, Wärme von der ersten Rücklaufleitung (24; 39) zu der zweiten Zuführungsleitung (38; 23) zu übertragen.

10. Kraftwerksanlage nach Anspruch 8 oder 9, wobei die Wärmehalteanordnung (5) eine zweite Rücklaufleitung (39; 24) umfasst, die dazu konfiguriert ist, einen zweiten Rückluftdurchsatz aus einem zweiten Abgaskanal (48; 34) der zweiten Dampfturbine (7b; 7a) zu entnehmen.

11. Kraftwerksanlage nach Anspruch 10, wobei die Wärmehalteanordnung (5) einen zweiten Wärmetauscher (54) umfasst, der dazu konfiguriert ist, Wärme von der zweiten Rücklaufleitung (39; 24) zu der ersten Zuführungsleitung (23; 38) zu übertragen.

12. Kraftwerksanlage nach einem der Ansprüche 7 bis 11, wobei die zweite Dampfturbine (7b; 7a) mit einem zweiten Gehäuse (9b; 9a) versehen ist, das durch ein zweites unteres Gehäuse und ein zweites oberes Gehäuse gebildet wird, die miteinander verbunden sind; wobei die Wärmehalteanordnung (5) umfasst:
einen zweiten oberen Gehäusetemperatursensor (41; 26), der außen an dem zweiten oberen Gehäuse angeordnet ist und dazu konfiguriert ist, eine Temperatur des zweiten oberen Gehäuses (TU2; TU1) zu erfassen;
einen zweiten unteren Gehäusetemperatursensor (40; 25), der außen an dem zweiten unteren Gehäuse angeordnet ist und dazu konfiguriert ist, eine Temperatur des zweiten unteren Gehäuses (TL2; TL1) zu erfassen;
wobei die Steuervorrichtung (22) dazu konfiguriert ist, wenigstens das zweite Gebläse (44; 30) auf der Grundlage der Differenz zwischen der Temperatur des zweiten oberen Gehäuses (TU2; TU1) und der Temperatur des zweiten unteren Gehäuses (TL2; TL1) zu regeln.

13. Kraftwerksanlage nach einem der Ansprüche 7 bis 12, die eine dritte Dampfturbine (7c) umfasst, die um dieselbe Welle rotiert wie die erste Dampfturbine (7a); wobei die Wärmehalteanordnung (5) eine Kühlanordnung (21) umfasst, die dazu konfiguriert ist, der dritten Dampfturbine (7c) Kühlluft zuzuführen.

14. Kraftwerksanlage nach Anspruch 13, wobei die dritte Dampfturbine (70) eine Niederdruckdampfturbine ist.

15. Verfahren zum Betreiben einer Kraftwerksanlage nach einem der vorangehenden Ansprüche; wobei das Verfahren umfasst:
- Abschalten der Anlage (1);
- Rotieren der wenigstens einen ersten Dampfturbine (7a; 7b) mit einer vordefinierten Drehzahl von weniger als 60 U/min;
- Aktivieren der Wärmehalteanordnung (5);
- Deaktivieren der Wärmehalteanordnung (5), wenn die Anlage (1) wieder anläuft.

## Revendications

1. Centrale électrique comprenant :
- au moins une unité turbine à gaz (2) ;
- au moins une unité vapeur (3) dotée d'au moins une première turbine à vapeur (7a ; 7b) qui tourne autour d'un arbre et dotée d'une enveloppe (9a ; 9b) qui comprend une première enveloppe inférieure et une première enveloppe supérieure couplées ensemble ;
- un générateur de vapeur (4) alimenté en gaz d'échappement provenant de l'unité turbine à gaz (2) et configuré pour générer de la vapeur à fournir à l'unité vapeur (3) ; le générateur de vapeur (4) comprenant une chambre de circulation des gaz d'échappement dans laquelle circulent les gaz d'échappement de l'unité turbine à gaz (2), et un circuit de vapeur (11) alimenté en eau déminéralisée et qui s'étend à l'intérieur de la chambre de circulation des gaz d'échappement, de façon à utiliser la chaleur des gaz chauds provenant de l'unité turbine à gaz (2) pour générer la vapeur à fournir à l'unité turbine à vapeur (3) ;
- un ensemble de maintien de la chaleur (5) destiné à contrôler la température dans l'unité vapeur (3) pendant l'arrêt de la centrale (1) ; l'ensemble de maintien de la chaleur (5) comprenant :
- une première canalisation d'alimentation (23 ; 38) configurée pour fournir un premier débit (Q1 ; Q2) d'air chauffé dans au moins un premier conduit d'alimentation en vapeur (28 ; 43) du circuit de vapeur (11) qui alimente l'une au moins des premières turbines à vapeur (7a ; 7b) ; la première canalisation d'air (23 ; 38) comprenant une première soufflante (30 ; 44) et au moins un premier dispositif de chauffage (31 ; 45) ;
- un capteur de température de la première enveloppe supérieure (26 ; 41) agencé à l'extérieur de la première enveloppe supérieure et configuré pour détecter la température de la première enveloppe supérieure (TU1 ; TU2) ;
- un capteur de température de la première enveloppe inférieure (25 ; 40) agencé à l'extérieur de la première enveloppe inférieure et configuré pour détecter la température de la première enveloppe inférieure (TL1 ; TL2) ;
- un dispositif de commande (22) configuré pour réguler au moins le premier ventilateur (30 ; 44) sur la base de la différence entre la température de la première enveloppe supérieure (TU1 ; TU2) et la température de la première enveloppe inférieure (TL1 ; TL2).

2. Centrale électrique selon la revendication 1, dans laquelle le dispositif de commande (22) est configuré pour réguler le premier ventilateur (30 ; 44) afin d'accroître le premier débit (Q1; Q2) d'air chauffé lorsque la différence entre la température de la première enveloppe supérieure (TU1 ; TU2) et la température de la première enveloppe inférieure (TL1 ; TL2) est supérieure à une valeur de seuil.

3. Centrale électrique selon la revendication 1 ou 2, comprenant un capteur de température d'un premier rotor (27 ; 42) configuré pour détecter une température indicative de la température du premier rotor (TR1 ; TR2) de la première turbine à vapeur (7a ; 7b) ; le dispositif de commande (22) étant configuré pour réguler au moins le premier ventilateur (30 ; 44) sur la base du gradient de la température indicative de la température du premier rotor (TR1 ; TR2).

4. Centrale électrique selon la revendication 3, dans laquelle le dispositif de commande (22) est configuré pour réguler le ventilateur (30 ; 44) afin que le gradient de la température indicative de la température du premier rotor (TR1 ; TR2), se situe dans une plage de sécurité.

5. Centrale électrique selon la revendication 3 ou 4, dans laquelle le dispositif de commande (22) est configuré pour réguler le premier dispositif de chauffage (31 ; 45) afin que la température indicative de la température du premier rotor (TR1 ; TR2) soit supérieure à une valeur de seuil.

6. Centrale électrique selon l'une quelconque des revendications précédentes, comprenant une première canalisation de retour (24 ; 39) configurée pour extraire un premier débit d'air de retour provenant d'un premier conduit d'échappement (34 ; 48) de la première turbine à vapeur (7a ; 7b).

7. Centrale électrique selon la revendication 6, dans laquelle l'unité vapeur (3) comprend au moins une deuxième turbine à vapeur (7b ; 7a) qui tourne autour du même arbre que celui de la première turbine à vapeur (7a ; 7b) ; l'ensemble de maintien de la chaleur (5) comprenant une seconde canalisation d'alimentation (38 ; 23) configurée pour fournir un second débit (Q2 ; Q1) d'air chauffé dans au moins un second conduit d'alimentation en vapeur (43 ; 28) du circuit de vapeur (11) qui alimente l'une au moins des deuxièmes turbines à vapeur (7b ; 7a) ; la seconde canalisation d'alimentation (38 ; 23) comprenant un second ventilateur (44 ; 30) et au moins un second dispositif de chauffage (45 ; 31).

8. Centrale électrique selon la revendication 7, dans laquelle la première turbine à vapeur (7a) est une turbine à vapeur à haute pression et la deuxième turbine à vapeur (7b) est une turbine à vapeur à pression intermédiaire.

9. Centrale électrique selon la revendication 7 ou 8, dans laquelle le système de maintien de la chaleur (5) comprend un premier échangeur de chaleur (53) configuré pour transférer la chaleur provenant de la première canalisation de retour (24 ; 39) vers la seconde canalisation d'alimentation (38 ; 23).

10. Centrale électrique selon la revendication 8 ou 9, dans laquelle l'ensemble de maintien de la chaleur (5) comprend une seconde canalisation de retour (39 ; 24) configurée pour extraire un second débit d'air de retour provenant d'un second conduit d'échappement (48 ; 34) de la deuxième turbine à vapeur (7b ; 7a).

11. Centrale électrique selon la revendication 10, dans laquelle le système de maintien de la chaleur (5) comprend un second échangeur de chaleur (54) configuré pour transférer la chaleur provenant de la seconde canalisation de retour (39 ; 24) vers la première canalisation d'alimentation (23 ; 38).

12. Centrale électrique selon l'une quelconque des revendications 7 à 11, dans laquelle la deuxième turbine à vapeur (7b ; 7a) est dotée d'une seconde enveloppe (9b ; 9a) définie par une seconde enveloppe inférieure et une seconde enveloppe supérieure couplées ensemble ; l'ensemble de maintien de la chaleur (5) comprenant :
un capteur de température de la seconde enveloppe supérieure (41 ; 26) agencé à l'extérieur de la seconde enveloppe supérieure et configuré pour détecter la température de la seconde enveloppe supérieure (TU2 ; TU1) ;
un capteur de température de la seconde enveloppe inférieure (40 ; 25) agencé à l'extérieur de la seconde enveloppe inférieure et configuré pour détecter la température de la seconde enveloppe inférieure (TL2 ; TL1) ;
le dispositif de commande (22) étant configuré pour réguler au moins le second ventilateur (44 ; 30) sur la base de la différence entre la température de la seconde enveloppe supérieure (TU2 ; TU1) et la température de la seconde enveloppe inférieure (TL2 ; TL1).

13. Centrale électrique selon l'une quelconque des revendications 7 à 12, comprenant une troisième turbine à vapeur (7c) qui tourne autour du même arbre que celui de la première turbine à vapeur (7a) ; l'ensemble maintien de la chaleur (5) comprenant un agencement de refroidissement (21) configuré pour fournir un air de refroidissement à la troisième turbine à vapeur (7c).

14. Centrale électrique selon la revendication 13, dans laquelle la troisième turbine à vapeur (7c) est une turbine à vapeur à basse pression.

15. Procédé destiné à actionner une centrale électrique selon l'une quelconque des revendications précédentes ; le procédé comprenant les étapes suivantes :
- arrêter la centrale électrique (1) ;
- faire tourner l'une au moins des premières turbines à vapeur (7a ; 7b) à une vitesse prédéfinie inférieure à 60 tr/min ;
- activer l'ensemble de maintien de la chaleur (5) ;
- désactiver l'ensemble de maintien de la chaleur (5) lorsque la centrale électrique (1) redémarre.
